# EUROPÄISCHE PATENTSCHRIFT

(11) **EP 1 969 279 B1**
(45) Veröffentlichungstag und Bekanntmachung des Hinweises auf die Patenterteilung: **07.11.2012**
(21) Anmeldenummer: 06818652.7
(22) Anmeldetag: 18.11.2006
(51) Int. Cl.: F16L 37/088, F16L 37/098, F16L 37/084

(54) **KUPPLUNGSTEIL FÜR STECKVERBINDERANORDNUNG**
COUPLING PART FOR A PLUG CONNECTOR ARRANGEMENT
PIECE DE COUPLAGE POUR SYSTEME DE CONNECTEUR ENFICHABLE

(30) Priorität: 05.01.2006 DE 102006002565
(43) Veröffentlichungstag der Anmeldung: 17.09.2008
(73) Patentinhaber: Alfred Kärcher GmbH & Co. KG, 71364 Winnenden (DE)
(72) Erfinder: BINDER, Jürgen, 71397 Leutenbach (DE); SCHMID, Jörg, 71579 Spiegelberg (DE)
(74) Vertreter: Karrais, Martin
(86) Internationale Anmeldenummer: PCT/EP2006/011084
(87) Internationale Veröffentlichungsnummer: WO 2007/076906

(56) Entgegenhaltungen:
- US-A- 2 823 934
- US-A- 2 913 263
- US-A- 3 450 424
- US-A- 3 709 528

## Beschreibung

Die Erfindung betrifft ein Kupplungsteil mit den Merkmalen des Oberbegriffes von Patentanspruch 1.

Lösbare Steckverbinderanordnungen mit einem Kupplungsteil und einem Steckteil, die ineinandergesteckt werden können, kommen zum Anschluß von Rohr- und Schlauchleitungen zum Einsatz, beispielsweise bei Flüssigkeits- oder Druckluftleitungen. Durch Einstecken des Steckteils in die Aufnahme des Kupplungsteiles kann eine fluiddichte Verbindung zwischen dem Steckteil und dem Kupplungsteil hergestellt werden, und zur Sicherung des Steckteils in der Aufnahme kommen Verriegelungselemente zum Einsatz. In der Gebrauchsmusterschrift DE 86 24 767 U1 wird in diesem Zusammenhang der Einsatz eines Verriegelungssteckers mit zwei Schenkeln und einem diese verbindenden Steg vorgeschlagen. Der Verriegelungsstecker kann seitlich durch, Schlitze im Kupplungsteil in die Aufnahme eingeführt werden, wobei er in einer Verriegelungsstellung Hinterschneidungen des Steckteils hintergreift und dieses dadurch in der Aufnahme in axialer Richtung festlegt. Soll das Steckteil gelöst werden, so wird mit einem Schraubendreher oder einem sonstigen geeigneten Werkzeug der Verriegelungsstecker im Bereich des Steges ergriffen und seitlich aus der Aufnahme herausgezogen. Dies hat zur Folge, daß die Schenkel des Verriegelungssteckers aufspreizen und dadurch das Steckteil freigeben.

Nachteilig an dem bekannten Kupplungsteil ist dessen schwierige Handhabung, die den Einsatz eines zusätzlichen werkzeuges erfordert. Außerdem muß zum Bewegen der Verriegelungselemente in deren Freigabestellung ein ausreichender seitlicher Bauraum vorhanden sein, um die Verriegelungselemente in Form der Schenkel des Verriegelungssteckers seitlich aus der Aufnahme herauszuziehen.

Aus den US-Patentschriften Nr. 2,823,934 und Nr. 3,709,528 sind Kupplungsteile für Steckverbinderanordnungen bekannt, wobei die Kupplungsteile jeweils ein Betätigungselement aufweisen, das relativ zum Kupplungsteil bewegbar ist. Durch Bewegen des Betätigungselements können Verriegelungselemente entgegen einer federelastischen Rückstellkraft in eine Freigabestellung bewegt werden, in der sie einen größeren Abstand zueinander aufweisen als in der Verriegelungsstellung. Diese Kupplungsteile weisen einen verhältnismäßig komplizierten Aufbau auf.

Aufgabe der vorliegenden Erfindung ist es, ein Kupplungsteil der eingangs genannten Art derart weiterzubilden, daß es einen einfachen Aufbau und eine einfache Handhabung aufweist.

Diese Aufgabe wird durch ein Kupplungsteil mit den Merkmalen von Patentanspruch 1 gelöst.

Die Verriegelungselemente können durch koaxiales Bewegen des Betätigungselementes aus ihrer Verriegelungsstellung in eine Freigabestellung bewegt werden, in der sie einen größeren Abstand zueinander aufweisen als in der Verriegelungsstellung. Durch eine Lageänderung des Betätigungselementes relativ zum Kupplungskörper können also die Verriegelungselemente quer zur Längsrichtung der Aufnahme aufgeweitet werden und dadurch die Aufnahme soweit freigeben, daß das in die Aufnahme eingesteckte Steckteil ohne weiteres aus der Aufnahme herausgezogen werden kann. Die Handhabung des erfindungsgemäßen Kupplungsteiles ist folglich sehr einfach.

Das erfindungsgemäße Kupplungsteil weist einen konstruktiv einfachen Aufbau auf, denn es sind lediglich ein Kupplungskörper mit der Aufnahme zum Einstecken des Steckteils sowie die Verriegelungselemente und das Betätigungselement erforderlich. Das erfindungsgemäße Kupplungsteil zeichnet sich somit durch den Einsatz weniger Bauteile aus und ist dadurch sehr unanfällig gegen Störungen.

Die Verriegelungselemente sind entgegen einer federelastischen Rückstellkraft in die Freigabestellung bewegbar. Dies hat den Vorteil, daß sie selbstätig in ihre Verriegelungsstellung übergehen, sofern keine Betätigungskraft auf die Verriegelungselemente einwirkt. Die Verriegelungselemente können entgegen der federelastischen Rückstellkraft aus ihrer Verriegelungsstellung in ihre Freigabestellung überführt werden. Es kann vorgesehen sein, daß die Verriegelungselemente in ihrer Freigabestellung arretierbar sind.

Von besonderem Vorteil im Hinblick auf eine möglichst einfache Konstruktion des Kupplungsteiles ist es, dass die Verriegelungselemente über ein Federelement miteinander verbunden sind. Das Federelement bildet somit ein Verbingungselement für die beiden Verriegelungselemente aus und kann dadurch als Halteelement für die Verriegelungselemente dienen. Zusätzlich übt das Federelement auf die Verriegelungselemente eine in Richtung ihrer Verriegelungsstellung gerichtete Rückstellkraft aus.

Besonders kostengünstig läßt sich das erfindungsgemäße Kupplungsteil dadurch herstellen, daß das Federelement und die Verriegelungselemente einstückig miteinander verbunden sind. Federelement und Verriegelungselemente können beispielsweise als einteiliger Drahtbügel ausgebildet sein in Form zweier Schenkel, die über einen Steg miteinander verbunden sind und an deren freiem Ende jeweils ein im Winkel zum jeweiligen Schenkel ausgerichtetes Verriegelungselement gehalten ist. Vorzugsweise ist das Verriegglungselement als senkrecht zum jeweiligen Schenkeln ausgerichteter Verriegelungstift ausgebildet.

Bevorzugt ist das Betätigungselement koaxial zur Längsachse der Aufnahme verschiebbar oder um die Längsachse der Aufnahme verdrehbar. Es kann beispielsweise vorgesehen sein, daß die Verriegelungselemente durch koaxiales Verschieben des Betätigungselements in ihre Freigabestellung bewegt werden können.

Von Vorteil ist es, wenn die Verriegelungsetemente als die Aufnahme seitlich durchgreifende Verriegelungsstifte ausgestaltet sind. Die Verriegetungsstifte können quer zur Längsachse der Aufnahme in die Aufnahme eintauchen zum Verriegeln des darin eingesteckten Steckteils. Die Verriegelungstifte können beispielsweise als Drahtstifte ausgestaltet sein.

Günstig ist es, wenn die Verriegelungstifte in der Verriegelungsstellung und in der Freigabestellung jeweils parallel zueinander ausgerichtet sind. Die Verriegelungstifte werden somit beim Übergang aus ihrer Verriegelungsstellung in ihre Freigabestellung lediglich in ihrem Abstand zueinander verändert, ohne daß sie verbogen oder in sonstiger Weise in ihrer gegenseitigen Ausrichtung verändert werden.

Als besonders günstig hat es sich erwiesen, wenn das Federelement U-förmig ausgestaltet ist und zwei parallel zur Längsachse der Aufnahme ausgerichtete Schenkel aufweist, die über einen Steg miteinander verbunden sind. Das Federelment kann mit den beiden Schenkeln und dem Steg eine Ebene definieren, die parallel zur Längsachse der Aufnahme ausgerichtet ist. Der Steg kann kreisbogenförmig gebogen sein.

Bei einer vorteilhaften Ausführungsform bildet der Steg das Betätigungselement aus, das vom Benutzer ergriffen werden kann. Dies hat den Vorteil, daß das Federelement direkt bewegt werden kann zum Überführen der Verriegelungselemente in ihre Freigabestellung.

Die beiden Verriegelungselemente sind jeweils mit einem Schenkel des Federelementes verbunden, und durch Aufspreizen der beiden Schenkel können die Verriegelungselemente aus ihrer Verriegelungsstellung in ihre Freigabestellung überführt werden.

Das Federelement ist vorzugsweise an der Außenseite des Kupplungskörpers angeordnet. Dadurch kann die Montage des erfindungsgemäßen Kupplungsteiles vereinfacht werden und außerdem zeichnet sich das Kupplungsteil bei einer derartigen Ausführungsform durch eine sehr geringe Baugröße aus. Zur Ausgestaltung des Betätigungselementes wurden bisher keine näheren Angaben gemacht. Bei einer vorteilhaften Ausführungsform umgibt das Betätigungselement den Kupplungskörper in Umfangsrichtung. Das Betätigungselement läßt sich dadurch auf konstruktiv einfache Weise unverlierbar am Kupplungskörper halten, und beispielsweise durch Verschieben oder Verdrehen des ringartig ausgebildeten Betätigungselementes können die Verriegelungselemente aus ihrer Verriegelungsstellung in ihre Freigabestellung überführt werden.

Das Betätigungselement kann beispielsweise als den Kupplungskörper und das Federelement in Umfangsrichtung umgebende Hülse ausgestaltet sein. Die Hülse bildet somit die Außenseite des erfindungsgemässen Kupplungsteiles, und zwischen der Hülse und dem Kupplungsteil kann das Federelement positioniert sein.

Zum Bewegen der Verriegelungselemente in ihre Freigabestellung ist bei einer bevorzugten Ausführungsform vorgesehen, daß der Kupplungskörper und/oder das Betätigungselement schräg zur Längsachse der Aufnahme ausgerichtete Gleitflächen aufweisen, an denen die Verriegelungselemente beim Übergang aus der Verriegelungsstellung in die Freigabestellung entlanggleiten. Die Gleitflächen bilden Führungsglieder für die Verriegelungselemente aus und beim Bewegen des Betätigungselementes gleiten die Verriegelungselemente an den Gleitflächen entlang und werden dabei aus ihrer Verriegelungsstellung in ihre Freigabestellung überführt. Die Gleitflächen können am Kupplungskörper angeordnet sein, alternativ oder ergänzend kann vorgesehen sein, daß das Betätigungselement Gleitflächen aufweist. Von besonderem Vorteil ist es, wenn sowohl der Kupplungskörper als auch das Betätigungselement einander zugeordnete Gleitflächen aufweisen, denn dadurch können die Verriegelungselemente besonders leichtgängig in ihre Freigabestellung bewegt werden.

Bei einer vorteilhaften Ausführungsform weist der Kupplungskörper einander diametral gegenüberliegend zwei Ausnehmungen auf mit einer schräg zur Längsachse der Aufnahme ausgerichteten Wandfläche, die eine Gleitfläche ausbildet, wobei die Verriegelungselemente jeweils in eine Ausnehmung eintachen.

Die Ausnehmungen können beispielsweise als Langlöcher ausgestaltet sein, die sich seitlich zur Mittelachse der Aufnahme des Kupplungskörpers versetzt durch diesen hindurch erstrecken.

Alternativ kann vorgesehen sein, daß die Ausnehmungen als in eine Außenfläche des Kupplungskörpers einmündende Schlitze ausgestaltet sind. Die Schlitze bilden eine seitliche Durchbrechung des Kupplungskörpers aus und erstrecken sich von dessen Außenfläche bis zur Aufnahme, so daß die in die Schlitze eingeführten Verriegelungselemente seitlich in die Aufnahme eintauchen, wenn sie ihre Verriegelungsstellung einnehmen.

Von Vorteil ist es, wenn die Verriegelungselemente die Ausnehmungen durchgreifen, das heißt wenn jedes Verriegelungselement zwei Endabschnitte aufweist, die über die jeweilige Ausnehmung überstehen. Die überstehenden Endabschnitte können Angriffsflächen für das Betätigungselement ausbilden, so daß die Verriegelungselemente mit ihren Endabschnitten an das Betätigungselement anlegbar sind und durch Bewegen des Betätigungselementes relativ zum Kupplungskörper an den Gleitflächen der Ausnehmungen entlang gleiten können.

Bei einer bevorzugten Ausgestaltung des erfindungsgemäßen Kupplungsteiles umgibt das Betätigungselement den Kupplungskörper in Umfangsrichtung und weist mindestens zwei Anschlagelemente auf mit einer schräg zur Längsachse ausgerichteten Anschlagfläche, die eine Gleitfläche ausbildet, wobei die Verriegelungselemente mit einem über die Außenfläche des Kupplungskörpers hervorstehenden Endabschnitt an die Anschlagfläche anlegbar sind. Bei einer derartigen Ausführungsform weist das Betätigungselement in Form der Anschlagflächen Führungsglieder für die Verriegelungselemente auf, wobei die Führungsglieder beim Bewegen des Betätigungselementes die Verriegelungselemente aus ihrer Verriegelungsstellung in ihre Freigabestellung überführen. Die Führungsglieder sind in Form der Anschlagflächen des Betätigungselementes ausgestaltet, die schräg zur Längsachse der Aufnahme des Kupplungskörpers ausgerichtet sind.

Günstig ist es, wenn das Betätigungselement jedem Verriegelungselement zugeordnet zwei Anschlagelemente aufweist, an deren Anschlagflächen das jeweilige Verriegelungselement mit einander abgewandten ersten und zweiten Endabschnitten anlegbar ist. Jedes Verriegelungselement wird bei einer derartigen Ausgestaltung von zwei Anschlagelementen erfaßt, wenn das Betätigungselement relativ zum Kupplungskörper bewegt, insbesondere verschoben wird. Ein erstes Anschlagelement bildet eine Anschlagfläche für einen ersten Endabschnitt des Verriegelungselements und ein zweites Anschlagelement bildet eine Anschlagfläche für den zweiten Endabschnitt desselben Verriegelungselements aus, wobei der zweite Endabschnitt dem ersten Endabschnitt abgewandt ist. Das Verriegelungselement wird somit an seinen Endbereichen jeweils von einem Anschlagelement erfaßt und kann dadurch ohne Verbiegen aus seiner Verriegelungstellung in seine Freigabestellung überführt werden.

Das Betätigungselement ist bevorzugt als den Kupplungskörper in Umfangsrichtung umgebende Hülse ausgestaltet mit einer radial nach innen gerichteten Ringschulter, an die die Anschlagelemente angeformt sind. Die Ringschulter bildet eine Verengung der Hülse aus und deckt einen Zwischenraum zwischen der Hülse und dem Kupplungskörper in axialer Richtung ab. An die Ringschulter sind in axialer Richtung die Anschlagelemente angeformt, an die beim Bewegen des Betätigungselementes die Verriegelungselemente anlegbar sind.

Eine hohe mechanische Belastbarkeit kann dem erfindungsgemäßen Kupplungsteil dadurch verliehen werden, daß die Hülse um die Längsachse der Aufnahme unverdrehbar, jedoch koaxial zur Längsachse verschiebbar am Kupplungskörper gehalten ist. Durch eine derartige Ausgestaltung läßt sich die Handhabung des Kupplungsteiles weiter vereinfachen, denn zur Betätigung des Kupplungsteiles wird der Benutzer die unverdrehbare Hülse intuitiv in Längsrichtung verschieben.

Zur unverdrehbaren Halterung der Hülse am Kupplungskörper ist bei einer vorteilhaften Ausführungsform vorgesehen, daß die Hülse innenseitig erste Führungselemente aufweist, die mit außenseitig am Kupplungskörper angeordneten zweiten Führungselementen zusammenwirken.

Die ersten und / oder zweiten Führungselemente können als parallel zur Längsachse der Aufnahme ausgerichtete Führungsrippen ausgestaltet sein. Es kann beispielsweise vorgesehen sein, daß die Hülse innenseitig zumindest ein Führungsrippenpaar aufweist, in das eine außenseitig vom Kupplungskörper abstehende Führungsrippe eintaucht. Vorzugsweise weist der Kupplungskörper mehrere, in Umfangsrichtung gleichmäßig zueinander beabstandete Führungsrippen auf, die jeweils in ein Führungsrippenpaar der Hülse eintauchen. Es kann auch eine umgekehrte Anordnung vorgesehen sein dergestalt, daß am Kupplungskörper zumindest ein Führungsrippenpaar angeordnet ist, in das eine innenseitig an der Hülse angeordnete Führungsrippe eintaucht.

Eine unverlierbare Verbindung zwischen der Hülse und dem Kupplungskörper wird bei einer bevorzugten Ausführungsform dadurch gewährleistet, daß die Hülse mit dem Kupplungskörper verrastbar ist.

Es kann vorgesehen sein, daß die Hülse in axialer Richtung auf den Kupplungskörper aufgerastet werden kann.

Beispielsweise kann vorgesehen sein, daß die Hülse innenseitig zwei Rastvorsprünge trägt, die einander diametral gegenüberliegen und die jeweils mit einem außenseitig am Kupplungskörper angeordneten Rastelement zusammenwirken.

Bei einer besonders bevorzugten Ausführungsform bildet die Aufnahme des Kupplungskörpers einen Dichtungsabschnitt und einen Verriegelungsabschnitt aus, wobei der Dichtungsabschnitt einen bezüglich der Längsachse der Aufnahme rotationssymmetrischen Querschnitt und der Verriegelungsabschnitt einen bezüglich der Längsachse der Aufnahme rotationsasymmetrischen Querschnitt aufweist, und wobei in den Verriegelungsabschnitt die Verriegelungselemente eintauchen. Durch die rotationssymmetrische Ausgestaltung des Dichtungsabschnittes kann das Steckteil auf konstruktiv einfache Weise, nämlich mittels eines Dichtungsringes, fluiddicht mit dem Kupplungskörper verbunden werden, und durch die rotationsasymmetrische Ausgestaltung des Verriegelungsabschnittes, in den die Verriegelungselemente eintauchen, kann dem Steckteil, das mit einem hinterschnittenen Bereich in dem Verriegelungsabschnitt positionierbar ist, eine definierte Ausrichtung relativ zum Kupplungskörper vorgegeben werden, und das Steckteil kann durch die rotationsasymmetrische Ausgestaltung des Verriegelungsabschnittes drehfest gehalten werden. Die drehfeste Halterung wiederum stellt sicher, daß die mechanische Belastung des am Steckteil angeordneten Dichtungsringes sehr gering gehalten wird.

Vorzugsweise umfaßt der Verriegelungsabschnitt zwei einander gegenüberliegende flache Wandabschnitte, die über zwei kreisbogenförmige Wandabschnitte miteinander verbunden sind. Der Verriegelungsabschnitt zeichnet sich bei einer derartigen Ausgestaltung durch einen im Wesentlichen zylinderförmigen Aufbau aus mit zwei einander gegenüberliegenden Abflachungen, die über kreisbogenförmige Wandabschnitte miteinander verbunden sind. Im Bereich der kreisbogenförmigen Wandabschnitte können die Verriegelungselemente in den Verriegelungsabschnitt eintauchen, und die flachen Wandabschnitte stellen plane Auflageflächen für das in die Aufnahme einsteckbare Steckteil dar.

Die Erfindung betrifft nicht nur ein Kupplungsteil der voranstehend genannten Art sondern auch eine Steckverbinderanordnung mit einem derartigen Kupplungsteil und mit einem Steckteil, das in die Aufnahme des Kupplungskörpers einsteckbar ist und das außenseitig zumindest eine Hinterschneidung aufweist, die zum Verriegeln des Steckteils in der Aufnahme mit einem Verriegelungselement zusammenwirkt.

Vorzugsweise erstreckt sich die Hinterschneidung in Umfangsrichtung des Steckteils lediglich über einen Teilbereich.

So kann beispielsweise vorgesehen sein, daß das Steckteil einen Dichtungsabschnitt und einen Verriegelungsabschnitt aufweist, wobei der Dichtungsabschnitt eine kreisförmige Ringnut trägt und der Verriegelungsabschnitt einen sich in Umfangsrichtung lediglich über einen Teilbereich erstreckenden Vorsprung aufweist, beispielsweise in Form eines Außenwulstes oder eines Flügels oder Stifts. Der Vorsprung bildet eine Hinterschneidung, die von einem Verriegelungselement des korrespondierenden Kupplungsteils hintergriffen werden kann.

Vorzugsweise weist das Steckteil zwei einander diametral gegenüberliegende Vorsprünge auf, die sich jeweils in Umfangsrichtung über einen Teilbereich erstrecken und über seitliche Abflachungen miteinander verbunden sind.

Der mindestens eine Vorsprung weist bei einer vorteilhaften Ausführungsform eine kegelige Stirnfläche auf. Dies hat den Vorteil, daß beim Einstecken des Steckteils in die Aufnahme des Kupplungskörpers die kegelige Stirnfläche des Vorsprunges an ein Verriegelungselement anlegbar ist und dieses radial nach außen gedrückt werden kann beim weiteren Einführen des Steckteils in die Aufnahme.

Die nachfolgende Beschreibung bevorzugter Ausführungsformen der Erfindung dient im Zusammenhang mit der Zeichnung der näheren Erläuterung. Es zeigen:
- Figur 1 :: eine perspektivische Darstellung nach Art einer Explosionszeichnung einer ersten Ausführungsform eines erfindungsgemäßen Kupplungsteiles;
- Figur 2 :: eine perspektivische Darstellung nach Art einer Explosionszeichnung eines Kupplungskörpers und einer Verriegelungseinrichtung des Kupplungsteiles aus Figur 1;
- Figur 3 :: eine perspektivische Darstellung des Kupplungsteiles aus Figur 1 in montiertem Zustand;
- Figur 4 :: eine Schnittansicht einer Hülse des Kupplungsteiles längs der Linie 4-4 in Figur 1;
- Figur 5 :: eine Schnittansicht der Hülse des Kupplungsteiles längs der Linie 5-5 in Figur 1;
- Figur 6a :: eine teilweise aufgetrennte Draufsicht auf das Kupplungsteil aus Figur 1 vor dem Einsetzen eines Steckteils;
- Figur 6b :: eine Längsschnittansicht des Kupplungsteiles aus Figur 1 vor dem Einsetzen des Steckteils;

- Figur 7a :: eine teilweise aufgetrennte Draufsicht auf das Kupplungsteil aus Figur 1 beim Einsetzen des Steckteils;
- Figur 7b :: eine Längsschnittansicht des Kupplungsteiles aus Figur 1 beim Einsetzen des Steckteils;
- Figur 8a :: eine teilweise aufgetrennte Draufsicht auf das Kupplungsteil aus Figur 1 mit eingesetztem Steckteil;
- Figur 8b :: eine Längsschnittansicht des Kupplungsteiles aus Figur 1 mit eingesetztem Steckteil;
- Figur 9a :: eine teilweise aufgetrennte Draufsicht auf das Kupplungsteil aus Figur 1 beim Freigeben des eingesetzten Steckteils;
- Figur 9b :: eine Längsschnittansicht des Kupplungsteiles aus Figur 1 beim Freigeben des eingesetzten Steckteils;
- Figur 10 :: eine Schnittansicht entsprechend Figur 4 einer alternativen Ausführungsform einer Hülse des Kupplungsteiles;
- Figur 11 :: eine Schnittansicht entsprechend Figur 5 der alternativen Ausführungsform der Hülse;

- Figur 12 :: eine perspektivische Darstellung einer alternativen Ausgestaltung eines Kupplungskörpers des Kupplungsteiles mit montierter Verriegelungseinrichtung;
- Figur 13 :: eine weitere alternative Ausgestaltung eines Kupplungskörpers mit montierter Verriegelungseinrichtung und
- Figur 14 :: eine perspektivische Darstellung einer zweiten Ausführungsform eines Kupplungsteiles und eines zugehörigen Steckteils.

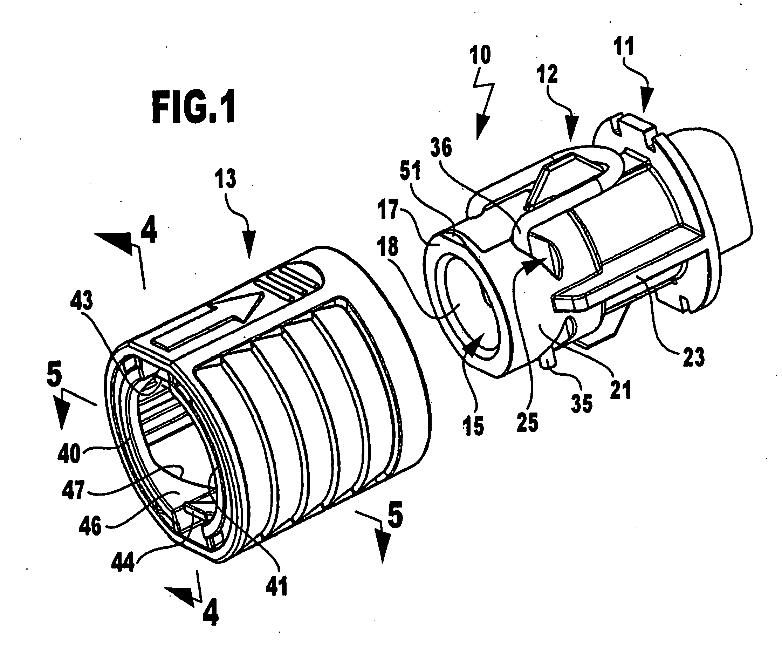

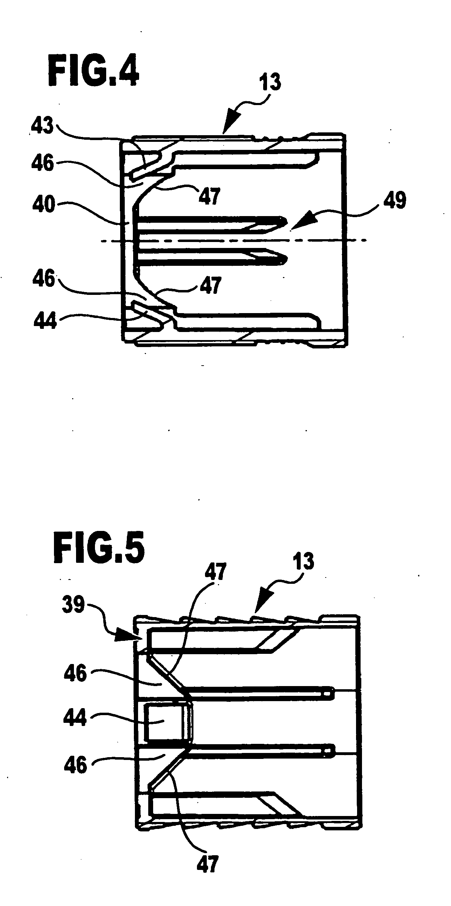

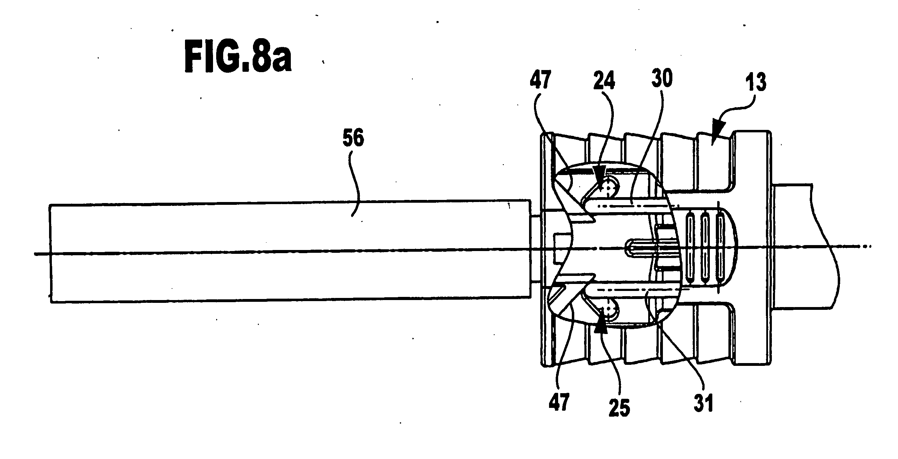

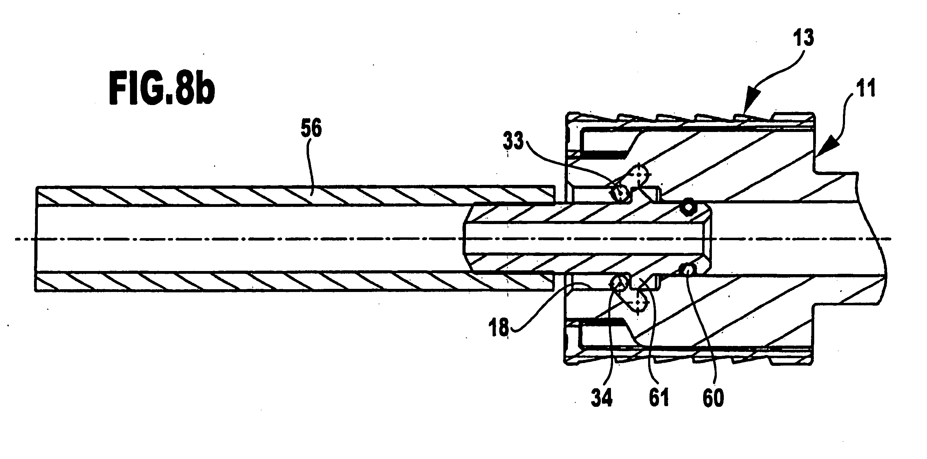

In den Figuren 1 bis 9b ist schematisch eine erste Ausführungsform eines insgesamt mit dem Bezugszeichen 10 belegten Kupplungsteiles für eine Steckverbinderanordnung dargestellt. Das Kupplungsteil 10 weist einen Kupplungskörper 11 auf sowie eine Verriegelungseinrichtung 12 und eine Hülse 13.

Der Kupplungskörper 11 ist im wesentlichen hohlzylinderförmig ausgestaltet und weist eine Aufnahme 15 auf in Form einer stufigen Durchgangsbohrung mit einem Dichtungsabschnitt 16, der sich in Richtung einer Frontseite 17 des Kupplungskörpers 11 über eine Stufe erweitert und in einen Verriegelungsabschnitt 18 übergeht, der über eine Erweiterung 19 in die Frontseite 17 einmündet. An seiner Außenseite 21 trägt der Kupplungskörper 11 in Umfangsrichtung in gleichmäßigem Abstand zueinander mehrere parallel zur Längsachse 22 der Aufnahme 15 ausgerichtete Führungsrippen 23. Bezogen auf die Längsachse 22 in Höhe des Verriegelungsabschnittes 18 weist der Kupplungskörper 11 seitlich versetzt zur Längsachse 22 zwei Ausnehmungen in Form zweier Langlöcher 24, 25 auf, die den Kupplungskörper 11 durchsetzen. Die Langlöcher 24 erstrecken sich schräg zur Längsachse 22 und bilden mit ihrer der Frontseite 17 zugewandten Wandfläche jeweils eine Gleitfläche 26 beziehungsweise 27 aus.

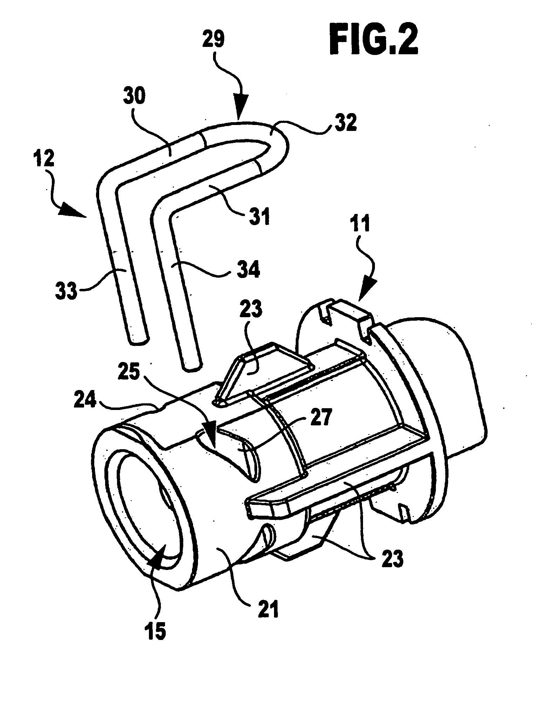

Die Verriegelungseinrichtung 12 ist als Drahtbügel ausgestaltet und umfaßt ein U-förmiges Federelement 29 mit zwei parallel zur Längsachse 22 ausgerichteten Schenkeln 30, 31, die über einen halbkreisförmig gebogenen Steg 32 einstückig miteinander verbunden sind. An die freien Enden der Schenkel 30 und 31 schließt sich jeweils ein Verriegelungselement in Form eines rechtwinklig zum jeweiligen Schenkel 30 beziehungsweise 31 ausgerichteten Verriegelungstiftes 33 beziehungsweise 34 an. Wie insbesondere aus den Figuren 1 und 2 deutlich wird, können die Verriegelungstifte 33, 34 seitlich in die Langlöcher 24 beziehungsweise 25 eingesetzt werden, wobei das Federelement 29 in einem abgeflachten Bereich der Außenseite 21 des Kupplungskörpers 11 positioniert wird und eine Führungsrippe 23 zwischen sich aufnimmt. Die Verriegelungstifte 33, 34 durchgreifen die Langlöcher 24 beziehungsweise 25, wobei sie mit einem ersten Endbereich 35, der dem Federelement 29 abgewandt ist, und mit einem zweiten Endbereich 36, der dem Federelement 29 zugewandt ist, über die Langlöcher 24 beziehungsweise 25 hervorstehen.

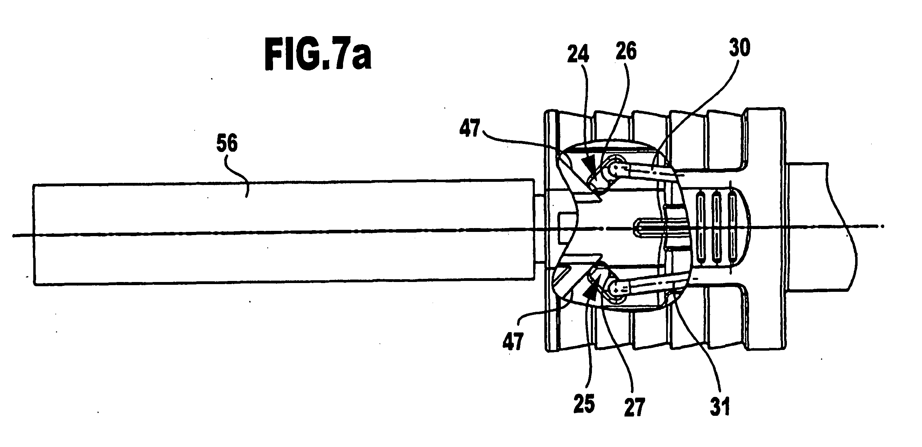

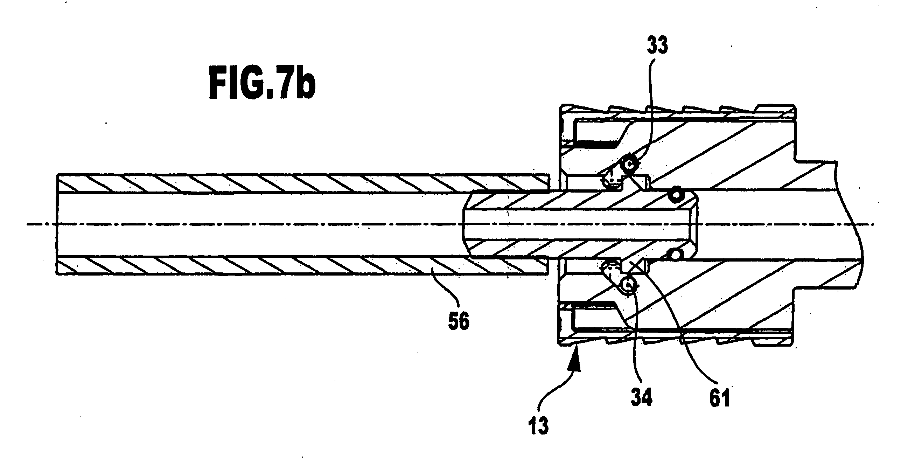

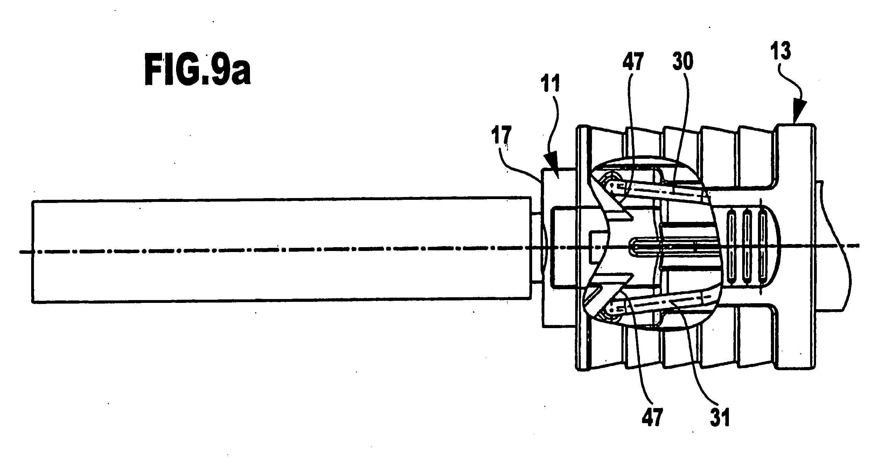

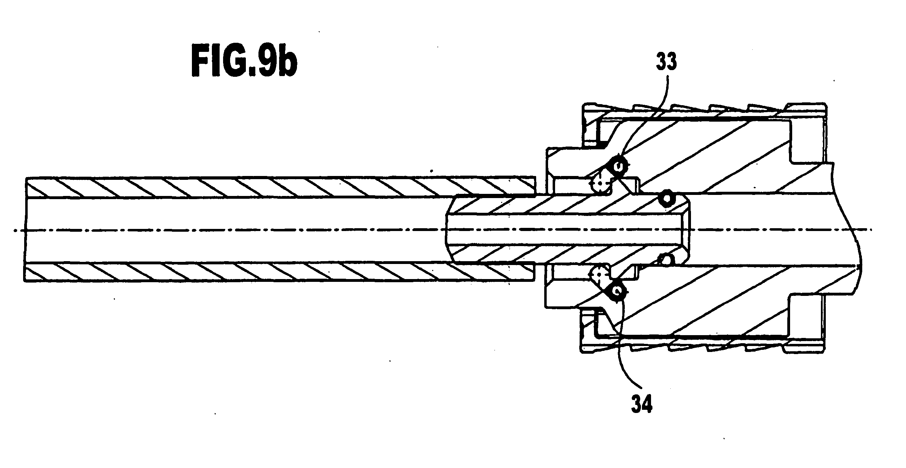

Die Hülse 13 bildet ein Betätigungselement aus, mit dessen Hilfe die Verriegelungstifte 33, 34 ausgehend von einer Verriegelungsstellung in eine Freigabestellung bewegt werden können. In der Verriegelungsstellung, die in den Figuren 1, 6a, 6b sowie 8a und 8b dargestellt ist, tauchen die Verriegelungstifte 33, 34 seitlich in den Verriegelungsabschnitt 18 der Aufnahme 15 ein. In der Freigabestellung, die in den Figuren 7a, 7b sowie 9a und 9b dargestellt ist, geben die Verriegelungstifte 33, 34 den Verriegelungsabschnitt 18 der Aufnahme 15 frei und nehmen einen größeren Abstand zueinander ein als in der Verriegelungsstellung.

Die Hülse 13 umgibt den Kupplungskörper 11 und das Federelement 29 sowie die Verriegelungstifte 33, 34 in Umfangsrichtung und in Höhe der Frontseite 17 des Kupplungskörpers 11 weist die Hülse 13 innenseitig eine Ringschulter 39 auf mit zwei kreisbogenförmigen, einander diametral gegenüberstehenden Schulterabschnitten 40, 41, zwischen denen, einander ebenfalls diametral gegenüberliegend, zwei elastisch verformbare Rastvorsprünge 43, 44 angeordnet sind. Den Rastvorsprüngen 43, 44 unmittelbar benachbart weist jeder Schulterabschnitt 40, 41 jeweils ein Anschlagelement 46 auf mit einer schräg zur Längsachse 22 ausgerichteten und der Frontseite 17 abgewandten Anschlagfläche 47.

Innenseitig trägt die Hülse 13 einander diametral gegenüberliegend zwei Führungsrippenpaare 49.

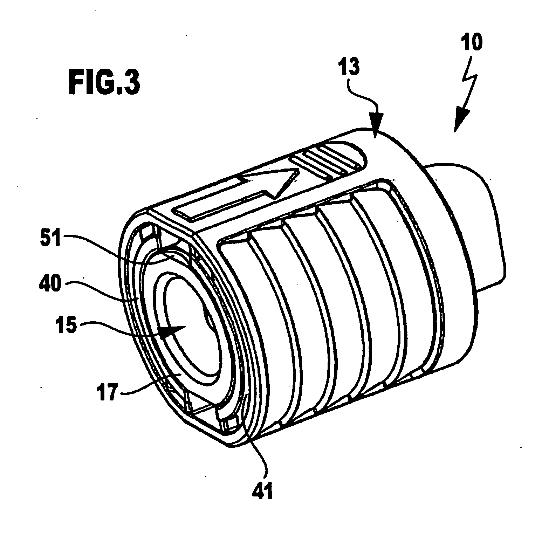

Zur Montage des Kupplungsteiles 10 kann zunächst die Verriegelungseinrichtung 12 mit dem Federelement 29 und den Verriegelungstiften 33, 34 am Kupplungskörper 11 montiert werden, wie dies in Figur 1 dargestellt ist, und anschließend kann die Hülse 13 in axialer Richtung auf den Kupplungskörper 11 aufgeschoben werden. Hierbei hintergreifen die Rastvorsprünge 43, 44 in Höhe der Frontseite 17 außenseitig am Kupplungskörper 11 angeordnete Außenvorsprünge 51, so daß die Hülse 13 auf den Kupplungskörper 11 aufschnappt und anschließend unverdrehbar an diesem gehalten ist, jedoch in Richtung der Längsachse 22 verschoben werden kann. Wird die Hülse 13 ausgehend von ihrer in Figur 3 dargestellten Ruhestellung, in der die Ringschulter 39 in Höhe der Frontseite 17 angeordnet ist, in die der Frontseite 17 abgewandte Richtung verschoben, so treffen die Anschlagflächen 47 der Schulterabschnitte 40 und 41 auf die ersten beziehungsweise zweiten Endbereiche 35, 36 der Verriegelungstifte 33, 34. Beim weiteren Verschieben der Hülse 13 wird die Verriegelungseinrichtung 12 in die der Frontseite 17 abgewandte Richtung verschoben, wobei die Verriegelungstifte 33, 34 an den Gleitflächen 26 beziehungsweise 27 der Langlöcher 24, 25 und an den Anschlagflächen 47 der Ringschulter 39 entlanggleiten und das U-förmige Federelement 29 aufgespreizt wird, so daß die Verriegelungstifte 33, 34 ausgehend von ihrer Verriegelungsstellung in ihre Freigabestellung überführt werden.

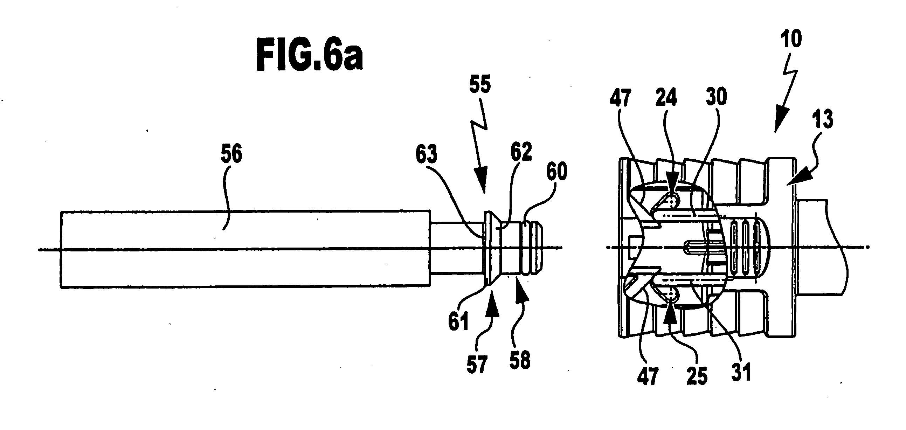

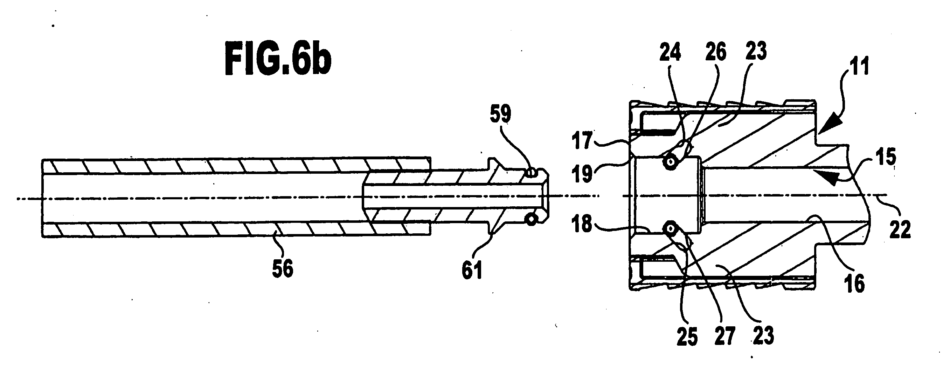

In die Aufnahme 15 des Kupplungskörpers 11 kann auf einfache Weise ein Steckteil 55, wie es in den Figuren 6a bis 9b dargestellt ist, eingeführt werden. Das Steckteil 55 ist in Form eines Rohrstückes ausgebildet, und auf das der Frontseite 17 des Kupplungskörpers 11 abgewandte Ende des Steckteils 55 ist im dargestellten Ausführungsbeispiel ein Schlauch 56 aufgesteckt. Das Steckteil 55 weist der Frontseite 17 zugewandt einen Dichtungsbereich 58 auf mit einer Ringnut 59, in die ein Dichtungsring 60 eingebettet ist. Im Abstand zur Ringnut 59 bildet das Steckteil 55 einen Verriegelungsbereich 57 mit einem in Umfangsrichtung vollständig umlaufenden Ringwulst 61 mit einer kegeligen Stirnfläche 62 und einer senkrecht zur Längsachse 22 ausgerichteten Rückfläche 63, die bezogen auf die Längsachse 22 eine Hinterschneidung ausbildet. Sowohl der Dichtungsbereich 58 als auch der Verriegelungsbereich 57 sind bei der in den Figuren 6a bis 9b dargestellten Ausführungsform des Steckteils 55 bezogen auf die Längsachse 22 rotationssymmetrisch ausgebildet, und auch der Verriegelungsabschnitt 18 sowie der Dichtungsabschnitt 16 des Kupplungskörpers 11 weisen eine entsprechende rotationssymmetrische Ausgestaltung auf.

Wird das Steckteil 55 in die Aufnahme 15 des Kupplungskörpers 11 eingesteckt, so trifft die Stirnfläche 62 auf die Verriegelungstifte 33, 34, und beim weiteren Einfügen des Steckteils 55 in die Aufnahme 15 werden die Verriegelungstifte 33, 34 von der Stirnfläche 62 soweit entlang der Gleitflächen 26 beziehungsweise 27 verschoben, bis der Ringwulst 61 zwischen die Verriegelungstifte 33, 34 hindurchtreten kann, wie dies in den Figuren 7a und 7b dargestellt ist. Der Dichtungsbereich 58 des Steckteils 55 nimmt dann eine Position innerhalb des Dichtungsabschnittes 16 des Kupplungskörpers 11 ein, wobei der Dichtungsring 60 fluiddicht an der Wand des Dichtungsabschnittes 16 anliegt.

Nachdem der Ringwulst 61 zwischen den Verriegelungstiften 33, 34 hindurchgeführt wurde, nehmen diese aufgrund der vom Federelement 29 auf sie einwirkenden federelastischen Rückstellkraft selbsttätig wieder ihre Verriegelungsstellung ein, in der sie in den Verriegelungsabschnitt 18 des Kupplungskörpers 11 seitlich eintauchen und dadurch den Ringwulst 61 hintergreifen. Das Steckteil 55 ist somit in axialer Richtung in der Aufnahme 15 des Kupplungskörpers 11 arretiert. Zum Arretieren des Steckteils 55 ist es bei dem in den Figuren 1 bis 9b dargestellten Kupplungsteil 10 nicht erforderlich, die Hülse 13 in axialer Richtung zu verschieben. Das Steckteil 55 kann somit von einem Benutzer mit einer Hand in das Kupplungsteil 10 eingesetzt werden.

Zum Lösen des Steckteils 55 müssen die Verriegelungstifte 33, 34 auseinandergedrückt werden. Hierzu kann der Benutzer die Hülse 13 in axialer Richtung soweit verschieben, bis die Anschlagflächen 47, wie voranstehend bereits erläutert, an den Endbereichen 35, 36 der Verriegelungstifte 33, 34 anliegen und diese dann beim weiteren Verschieben der Hülse 13 in ihre Freigabestellung überführen. In dieser Stellung, dies wird aus den Figuren 9a und 9b deutlich, kann das Steckteil 55 der Aufnahme 15 ohne weiteres entnommen werden. Der Benutzer kann anschließend die Hülse 13 freigeben, die dann von den Endbereichen 35, 36 der Verriegelungstifte 33, 34 aufgrund der Federkraft des Federelementes 29 wieder in ihre in Figur 3 dargestellte Ruhestellung verschoben wird.

Das Kupplungsteil 10 bildet in Kombination mit dem Steckteil 55 eine Steckverbinderanordnung aus, mit deren Hilfe beispielsweise zwei Schläuche oder zwei Rohrleitungsabschnitte auf einfache Weise fluiddicht miteinander verbunden und wahlweise auch wieder voneinander getrennt werden können.

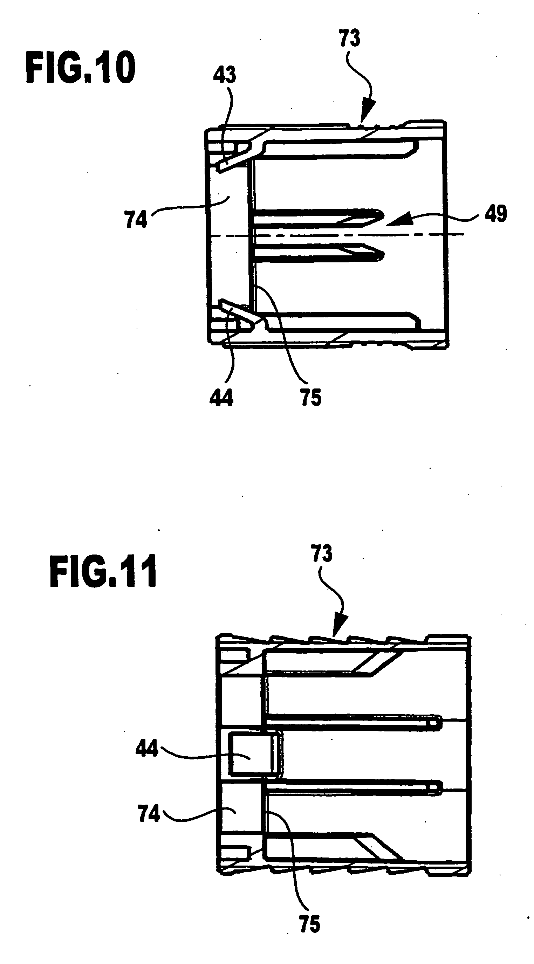

In den Figuren 10 und 11 ist eine alternative Ausführungsform einer insgesamt mit dem Bezugszeichen 73 belegten Hülse dargestellt. Diese ist weitgehend identisch ausgebildet wie die voranstehend erläuterte Hülse 13. Im Unterschied zu dieser weist die Hülse 73 jedoch keine Anschlagelemente 46 mit schräg zur Längsachse 22 ausgerichteten Anschlagflächen 47 auf, vielmehr umfaßt die Hülse 73 eine Ringschulter 74, die gegenüber der Ringschulter 39 der Hülse 13 in axialer Richtung verlängert ist und mit ihrer der Frontseite 17 abgewandten Rückseite 75 eine Anschlagfläche bildet, die in einer senkrecht zur Längsachse 22 ausgerichteten Ebene verläuft, im Unterschied zu den Anschlagflächen 47 also nicht schräg zur Längsachse 22 ausgerichtet ist.

Auch die Hülse 73 kann auf den Kupplungskörper 11 aufgeschnappt werden. Wird die Hülse 73 in die der Frontseite 17 abgewandte Richtung verschoben, so trifft die Rückseite 75 der Ringschulter 74 auf die Endbereiche 35 und 36 der Verriegelungstifte 33 und 34, die dann beim weiteren Verschieben der Hülse 73 ebenfalls an den Gleitflächen 26, 27 der Langlöcher 24, 25 entlang verschoben werden.

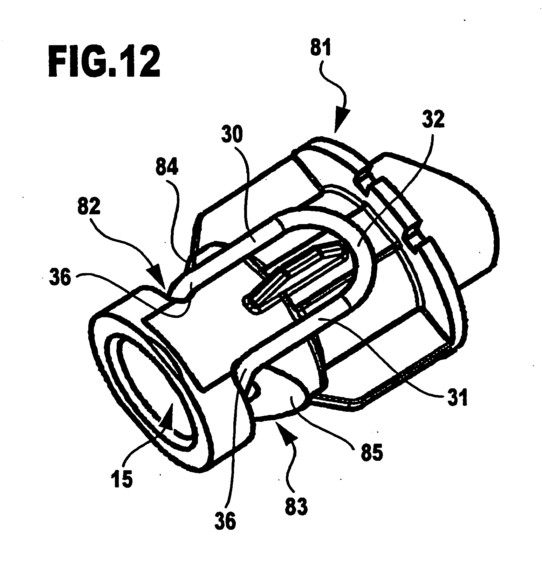

In Figur 12 ist eine alternative Ausführungsform eines insgesamt mit dem Bezugszeichen 81 belegten Kupplungskörpers dargestellt. Dieser ist weitgehend identisch ausgebildet wie der voranstehend erläuterte Kupplungskörper 11. Im Unterschied zu letzterem weist der Kupplungskörper 81 jedoch keine Langlöcher auf sondern in Höhe des Verriegelungsabschnittes 18 angeordnete seitliche Schlitze 82, 93, die in der Außenseite 21 des Kupplungskörpers 81 einmünden und sich bis in den Bereich des Verriegelungsabschnittes 18 des Kupplungskörpers 81 erstrecken. Die Schlitze 82, 83 nehmen entsprechend den Langlöchern 24, 24 jeweils einen Verriegelungstift 33 beziehungsweise 34 auf und bilden mit einem Wandbereich jeweils eine schräg zur Längsachse 22 ausgerichtete Gleitfläche 84 beziehungsweise 85, an der die Verriegelungstifte 33, 34 beim Verschieben der Hülse 13 oder der Hülse 83 entlanggleiten können.

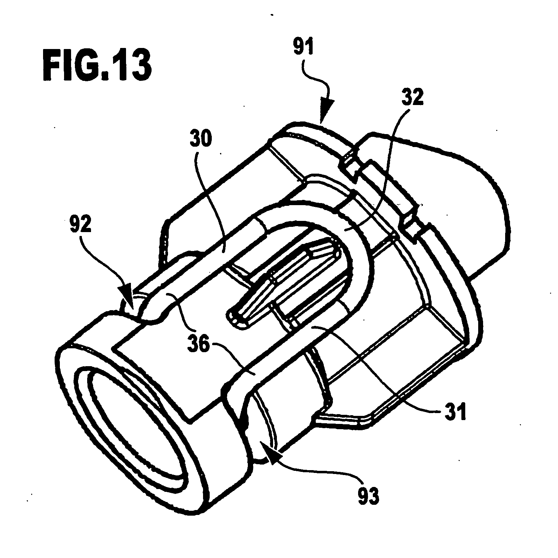

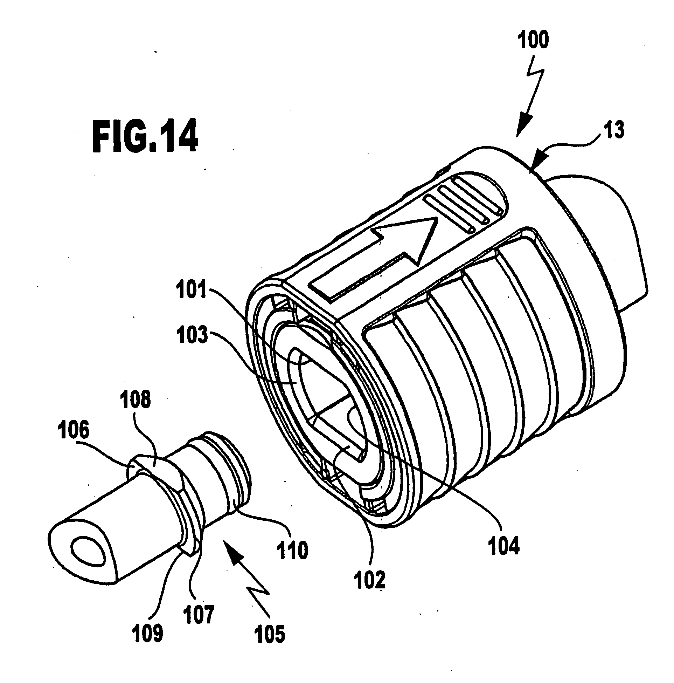

In Figur 13 ist eine weitere alternative Ausführungsform eines insgesamt mit dem Bezugszeichen 91 belegten Kupplungskörpers dargestellt, der weitgehend identisch ausgebildet ist wie der voranstehend erläuterte Kupplungskörper 11. Im Unterschied zu diesem weist er statt der Langlöcher 24, 25 seitliche Schlitze 92, 93 auf, die radial ausgerichtet sind und in die Außenseite 21 des Kupplungskörpers 91 einmünden und jeweils einen Verriegelungstift 33, 34 aufnehmen. Der Kupplungskörper 91 bildet in Kombination mit der Hülse 13 aufnehmen. Der Kupplungskörper 91 bildet in Kombination mit der Hülse 13 ein erfindungsgemäßes Kupplungsteil aus. Die Hülse 13 kann auf den Kupplungskörper 91 aufgeschnappt werden, und durch Verschieben der Hülse 13 können die Verriegelungstifte 33, 34, die in den Schlitzen 92, 93 angeordnet sind, aus ihrer in Figur 14 dargestellten Verriegelungsstellung in eine Freigabestellung überführt werden. Hierbei gleiten die Endbereiche 35, 36 der Verriegelungstifte 33, 34 an den Anschlagflächen 47 der Hülse 13 entlang und werden dadurch auseinandergedrückt.

In Figur 14 ist eine alternative Ausführungsform eines erfindungsgemäßen Kupplungsteiles dargestellt, das insgesamt mit dem Bezugszeichen 100 belegt ist. Außerdem ist in Figur 14 eine alternative Ausführungsform eines erfindungsgemäßen Steckteils dargestellt, das insgesamt mit dem Bezugszeichen 105 belegt ist.

Das Kupplungsteil 100 unterscheidet sich von dem voranstehend erläuterten Kupplungsteil 10 lediglich dadurch, daß der Verriegelungsabschnitt 18 der Aufnahme 15 bezogen auf die Längsachse 22 rotationsasymmetrisch ausgebildet ist. Er umfaßt zwei einander diametral gegenüberliegende flache Wandabschnitte 101, 102, die über kreisbogenförmige Wandabschnitte 103, 104 miteinander verbunden sind.

Das Steckteil 105 ist weitgehend identisch ausgebildet wie das voranstehend erläuterte Steckteil 55, im Unterschied zu diesem weist es jedoch zwei sich jeweils in Umfangsrichtung nur über einen Teilbereich erstreckende Außenwülste 106, 107 auf, die einander diametral gegenüberliegen und jeweils über eine seitliche Abflachung 108, 109 miteinander verbunden sind.

Auch das Steckteil 105 trägt seinem freien Ende benachbart eine rotationssymmetrisch ausgebildete Ringnut, die einen Dichtungsring 110 aufnimmt. Das Steckteil 105 kann in die Aufnahme des Kupplungsteiles 100 eingesetzt werden, wobei durch die rotationsasymmetrische,Ausgestaltung der Außenwülste 106 und 107 und des Verriegelungsabschnittes des Kupplungsteiles 100 sichergestellt ist, daß das in das Kupplungsteil 100 eingesetzte Steckteil 105 nicht verdreht werden kann. Es ist somit sowohl in axialer Richtung als auch in radialer Richtung im Kupplungsteil 100 festgelegt. Dadurch wird eine Abnutzung des Dichtungsringes 110 durch Verdrehen des Steckteils 105 vermieden. Außerdem kann das Steckteil 105 nur in vorgegebener Orientierung in das Kupplungsteil 100 eingesetzt werden. Das Steckteil 105 zeichnet sich durch einen besonders geringen Materialeinsatz aus und ist dadurch besonders kostenoptimiert herstellbar. Lediglich im Bereich der Verriegelungstifte 33, 34 weist das Steckteil 105 korrespondierende Hinterschneidungen in Form der Außenwülste 106, 107 auf, wohingegen die Bereiche zwischen den Verriegelungstiften 33, 34 ohne Hinterschneidung ausgebildet sind.

## Patentansprüche

1. Kupplungsteil für eine Steckverbinderanordnung, wobei das Kupplungsteil (10; 100) einen Kupplungskörper (11) aufweist mit einer Aufnahme (15), in die ein Steckteil (55; 105) der Steckverbinderanordnung zur Herstellung einer fluiddichten Verbindung in Richtung einer Längsachse (22) der Aufnahme (15) einsteckbar ist, und wobei das Kupplungsteil (10; 100) zwei zueinander beabstandete Verriegelungselemente (33, 34) aufweist, die in einer Verriegelungsstellung einander gegenüberliegend seitlich in die Aufnahme (15) eintauchen zum Hintergreifen des Steckteils (55; 105) und die zum Lösen des Steckteils (55; 105) in eine Freigabestellung bewegbar sind, wobei das Kupplungsteil (10; 100) ein relativ zum Kupplungskörper (11) bewegbares Betätigungselement (13; 73) aufweist und die Verriegelungselemente (33, 34) durch Bewegen des Betätigungselementes (13; 73) entgegen einer federelastischen Rückstellkraft in die Freigabestellung bewegbar sind, in der sie einen größeren Abstand zueinander aufweisen als in der Verriegelungsstellung, **dadurch gekennzeichnet, daß** die Verriegelungselemente (33, 34) über ein Federelement (29) einstückig miteinander verbunden sind.

2. Kupplungsteil nach Anspruch 1, **dadurch gekennzeichnet, daß** das Betätigungselement (13; 73) koaxial zur Längsachse (22) der Aufnahme (15) verschiebbar ist.

3. Kupplungsteil nach Anspruch 1 oder 2, **dadurch gekennzeichnet, daß** die Verriegelungselemente als die Aufnahme (15) seitlich durchgreifende Verriegelungstifte (33, 34) ausgestaltet sind.

4. Kupplungsteil nach Anspruch 3, **dadurch gekennzeichnet, daß** die Verriegelungstifte (33, 34) in der Verriegelungsstellung und in der Freigabestellung parallel zueinander ausgerichtet sind.

5. Kupplungsteil nach einem der voranstehenden Ansprüche, **dadurch gekennzeichnet, daß** das Federelement (29) U-förmig ausgestaltet ist und zwei parallel zur Längsachse (22) der Aufnahme (15) ausgerichtete Schenkel (30, 31) aufweist, die über einen Steg (32) miteinander verbunden sind.

6. Kupplungsteil nach einem der voranstehenden Ansprüche, **dadurch gekennzeichnet, daß** das Federelement (29) an der Außenseite des Kupplungskörpers (11) angeordnet ist.

7. Kupplungsteil nach einem der voranstehenden Ansprüche, **dadurch gekennzeichnet, daß** das Betätigungselement (13; 73) den Kupplungskörper (11) in Umfangsrichtung umgibt.

8. Kupplungsteil nach Anspruch 6 oder 7, **dadurch gekennzeichnet, daß** das Betätigungselement als den Kupplungskörper (11) und das Federelement (29) in Umfangsrichtung umgebende Hülse (13; 73) ausgestaltet ist.

9. Kupplungsteil nach einem der voranstehenden Ansprüche, **dadurch gekennzeichnet, daß** der Kupplungskörper (11) und / oder das Betätigungselement (13; 73) schräg zur Längsachse (22) der Aufnahme (15) ausgerichtete Gleitflächen (26, 27; 47) aufweisen, an denen die Verriegelungselemente (33, 34) beim Übergang aus der Verriegelungsstellung in die Freigabestellung entlanggleiten.

10. Kupplungsteil nach Anspruch 9, **dadurch gekennzeichnet, daß** der Kupplungskörper (11) einander diametral gegenüberliegend zwei Ausnehmungen (24, 25; 82, 83) aufweist mit einer schräg zur Längsachse (22) der Aufnahme (15) ausgerichteten Wandfläche, die eine Gleitfläche (26, 27; 84, 85) ausbildet, wobei die Verriegelungselemente (33, 34) jeweils in eine Ausnehmung (24, 25; 82, 83) eintauchen.

11. Kupplungsteil nach Anspruch 10, **dadurch gekennzeichnet, daß** die Ausnehmungen als Langlöcher (24, 25) ausgestaltet sind.

12. Kupplungsteil nach Anspruch 10, **dadurch gekennzeichnet, daß** die Ausnehmungen als in eine Außenfläche (21) des Kupplungskörpers (81) einmündende Schlitze (82, 83) ausgestaltet sind.

13. Kupplungsteil nach Anspruch 10, 11 oder 12, **dadurch gekennzeichnet, daß** die Verriegelungselemente (33, 34) die Ausnehmungen (24, 25; 82, 83; 92, 93) durchgreifen.

14. Kupplungsteil nach einem der voranstehenden Ansprüche, **dadurch gekennzeichnet, daß** das Betätigungselement (13, 73) den Kupplungskörper (11; 81; 91) in Umfangsrichtung umgibt und mindestens zwei Anschlagelemente (46) aufweist mit einer schräg zur Längsachse (22) der Aufnahme (15) ausgerichteten Anschlagfläche (47), die eine Gleitfläche ausbildet, wobei die Verriegelungselemente (33, 34) mit einem über die Außenfläche (21) des Kupplungskörpers (11; 81; 91) hervorstehenden Endabschnitt (35, 36) an die Anschlagfläche (47) anlegbar sind.

15. Kupplungsteil nach Anspruch 14, **dadurch gekennzeichnet, daß** das Betätigungselement (13; 73) jedem Verriegelungselement (33, 34) zugeordnet zwei Anschlagelemente (46) aufweist, an deren Anschlagflächen (47) das jeweilige Verriegelungselement (33, 34) mit einander abgewandten ersten und zweiten Endabschnitten (35, 36) anlegbar ist.

16. Kupplungsteil nach Anspruch 14 oder 15, **dadurch gekennzeichnet, daß** das Betätigungselement als den Kupplungskörper (11; 81; 91) in Umfangsrichtung umgebende Hülse (13; 73) ausgestaltet ist mit einer radial nach innen gerichteten Ringschulter (39), an die die Anschlagelemente (46) angeformt sind.

17. Kupplungsteil nach einem der Ansprüche 8 bis 16, **dadurch gekennzeichnet, daß** die Hülse (13; 73) um die Längsachse (22) der Aufnahme (15) unverdrehbar, jedoch koaxial zur Längsachse (22) verschiebbar am Kupplungskörper (11; 81; 91) gehalten ist.

18. Kupplungsteil nach Anspruch 17, **dadurch gekennzeichnet, daß** die Hülse (13; 73) innenseitig erste Führungselemente (49) aufweist, die mit außenseitig am Kupplungskörper (11; 81; 91) angeordneten zweiten Führungselementen (23) zusammenwirken.

19. Kupplungsteil nach Anspruch 18, **dadurch gekennzeichnet, daß** die ersten und / oder zweiten Führungselemente als parallel zur Längsachse (22) der Aufnahme (15) ausgerichtete Führungsrippen (23; 29) ausgestaltet sind.

20. Kupplungsteil nach einem der Ansprüche 8 bis 19, **dadurch gekennzeichnet, daß** die Hülse (13; 73) mit dem Kupplungskörper (11; 81; 91) verrastbar ist.

21. Kupplungsteil nach Anspruch 20, **dadurch gekennzeichnet, daß** die Hülse (13; 73) innenseitig zwei Rastvorsprünge (43, 44) trägt, die einander diametral gegenüberliegen und die jeweils mit einem außenseitig am Kupplungskörper (11; 81; 91) angeordneten Rastelement (51) zusammenwirken.

22. Kupplungsteil nach einem der voranstehenden Ansprüche, **dadurch gekennzeichnet, daß** die Aufnahme (15) einen Dichtungsabschnitt (16) und einen Verriegelungsabschnitt (18) ausbildet, wobei der Dichtungsabschnitt (16) einen bezüglich der Längsachse (22) der Aufnahme (15) rorationssymmetrischen Querschnitt aufweist und wobei der Verriegelungsabschnitt (18) einen bezüglich der Längsachse (22) der Aufnahme (15) rotationsasymmetrischen Querschnitt aufweist und in den Verriegelungsabschnitt (18) die Verriegelungselemente (33, 34) eintauchen.

23. Kupplungsteil nach Anspruch 22, **dadurch gekennzeichnet, daß** der Verriegelungsabschnitt (18) zwei einander diametral gegenüberliegende flache Wandabschnitte (101, 102) aufweist, die über zwei kreisbogenförmige Wandabschnitte (103, 104) miteinander verbunden sind.

24. Steckverbinderanordnung mit einem Kupplungsteil (10; 100) nach einem der voranstehenden Ansprüche und mit einem Steckteil (55; 105), das in die Aufnahme (15) des Kupplungskörpers (11; 81; 91) einsteckbar ist und das außenseitig zumindest eine Hinterschneidung (61; 106, 107) aufweist, die zum Verriegeln des Steckteils (55; 105) in der Aufnahme (15) mit den Verriegelungselementen (33, 34) zusammenwirkt.

## Claims

1. Coupling part for a plug connector arrangement, the coupling part (10; 100) having a coupling body (11) with a receptacle (15) into which a plug-in part (55; 105) of the plug connector arrangement can be plugged in the direction of a longitudinal axis (22) of the receptacle (15) in order to produce a fluid-tight connection, and the coupling part (10; 100) having two spaced-apart locking elements (33, 34) which, in a locking position, penetrate laterally, opposite one another, into the receptacle (15) in order to engage behind the plug-in part (55; 105) and which are movable into a release position in order to release the plug-in part (55; 105), the coupling part (10; 100) having an actuating element (13; 73) which is movable relative to the coupling body (11), and the locking elements (33, 34), by virtue of the actuating element (13; 73) being moved, being movable counter to a resilient restoring force into the release position, in which they are spaced apart from one another to a greater extent than in the locking position, **characterized in that** the locking elements (33, 34) are connected integrally to one another via a spring element (29).

2. Coupling part according to Claim 1, **characterized in that** the actuating element (13; 73) is displaceable coaxially in relation to the longitudinal axis (22) of the receptacle (15).

3. Coupling part according to Claim 1 or 2, **characterized in that** the locking elements are configured as locking pins (33, 34) which pass laterally through the receptacle (15).

4. Coupling part according to Claim 3, **characterized in that** the locking pins (33, 34) are oriented parallel to one another in the locking position and in the release position.

5. Coupling part according to one of the preceding claims, **characterized in that** the spring element (29) is of U-shaped configuration and has two legs (30, 31) which are oriented parallel to the longitudinal axis (22) of the receptacle (15) and are connected to one another via a cross-piece (32).

6. Coupling part according to one of the preceding claims, **characterized in that** the spring element (29) is disposed on the outside of the coupling body (11).

7. Coupling part according to one of the preceding claims, **characterized in that** the actuating element (13; 73) encloses the coupling body (11) in the circumferential direction.

8. Coupling part according to Claim 6 or 7, **characterized in that** the actuating element is configured as a sleeve (13; 73) which encloses the coupling body (11) and the spring element (29) in the circumferential direction.

9. Coupling part according to one of the preceding claims, **characterized in that** the coupling body (11) and/or the actuating element (13; 73) have/has sliding surfaces (26, 27; 47) which are oriented obliquely in relation to the longitudinal axis (22) of the receptacle (15) and along which the locking elements (33, 34) slide during transfer from the locking position into the release position.

10. Coupling part according to Claim 9, **characterized in that** the coupling body (11) has two apertures (24, 25; 82, 83) which are located diametrically opposite one another and have a wall surface which is oriented obliquely in relation to the longitudinal axis (22) of the receptacle (15) and forms a sliding surface (26, 27; 84, 85), the locking elements (33, 34) each penetrating into an aperture (24, 25; 82, 83).

11. Coupling part according to Claim 10, **characterized in that** the apertures are configured as elongate holes (24, 25).

12. Coupling part according to Claim 10, **characterized in that** the apertures are configured as slots (82, 83) which open out into an outer surface (21) of the coupling body (81).

13. Coupling part according to Claim 10, 11 or 12, **characterized in that** the locking elements (33, 34) pass through the apertures (24, 25; 82, 83; 92, 93).

14. Coupling part according to one of the preceding claims, **characterized in that** the actuating element (13, 73) encloses the coupling body (11; 81; 91) in the circumferential direction and has at least two stop elements (46) with a stop surface (47) which is oriented obliquely in relation to the longitudinal axis (22) of the receptacle (15) and forms a sliding surface, the locking elements (33, 34) being positionable against the stop surface (47) by way of an end portion (35, 36) which projects beyond the outer surface (21) of the coupling body (11; 81; 91).

15. Coupling part according to Claim 14, **characterized in that** the actuating element (13; 73) has two stop elements (46), which are associated with a respective locking element (33, 34), and against the stop surfaces (47) of which the respective locking element (33, 34) is positionable by way of first and second end portions (35, 36) which are directed away from one another.

16. Coupling part according to Claim 14 or 15, **characterized in that** the actuating element is configured as a sleeve (13; 73) which encloses the coupling body (11; 81; 91) in the circumferential direction and has a radially inwardly directed annular shoulder (39) on which the stop elements (46) are formed.

17. Coupling part according to one of Claims 8 to 16, **characterized in that** the sleeve (13; 73) is retained on the coupling body (11; 81; 91) such that it cannot be rotated about the longitudinal axis (22) of the receptacle (15), but can be displaced coaxially in relation to the longitudinal axis (22).

18. Coupling part according to Claim 17, **characterized in that** the sleeve (13; 73) has, on the inside, first guide elements (49), which interact with second guide elements (23) disposed on the outside of the coupling body (11; 81; 91).

19. Coupling part according to Claim 18, **characterized in that** the first and/or second guide elements are configured as guide ribs (23; 29) which are oriented parallel to the longitudinal axis (22) of the receptacle (15).

20. Coupling part according to one of Claims 8 to 19, **characterized in that** the sleeve (13; 73) can be latched to the coupling body (11; 81; 91).

21. Coupling part according to Claim 20, **characterized in that** the sleeve (13; 73) carries, on the inside, two latching protrusions (43, 44) which are located diametrically opposite one another and each interact with a latching element (51) disposed on the outside of the coupling body (11; 81; 91).

22. Coupling part according to one of the preceding claims, **characterized in that** the receptacle (15) forms a sealing portion (16) and a locking portion (18), the sealing portion (16) having a cross section which is rotationally symmetrical in relation to the longitudinal axis (22) of the receptacle (15), and the locking portion (18) having a cross section which is rotationally asymmetrical in relation to the longitudinal axis (22) of the receptacle (15), and the locking elements (33, 34) penetrating into the locking portion (18).

23. Coupling part according to Claim 22, **characterized in that** the locking portion (18) has two flat wall portions (101, 102) which are located diametrically opposite one another and are connected to one another via two arcuate wall portions (103, 104).

24. Plug connector arrangement having a coupling part (10; 100) according to one of the preceding claims, and having a plug-in part (55; 105) which can be plugged into the receptacle (15) of the coupling body (11; 81; 91) and, on the outside, has at least one undercut (61; 106, 107), which interacts with the locking elements (33, 34) in order to lock the plug-in part (55; 105) in the receptacle (15).

## Revendications

1. Pièce de couplage pour dispositif de liaison par enfichage, la pièce de couplage (10 ; 100) comportant un corps de couplage (11) doté d'un logement (15) dans lequel une pièce à enfichage (55 ; 105) du dispositif de liaison par enfichage peut être enfichée selon un axe longitudinal (22) du logement (15) pour établir une liaison étanche aux fluides, et la pièce de couplage (10 ; 100) comportant deux éléments de verrouillage (33, 34) qui sont écartés l'un de l'autre et qui pénètrent latéralement dans le logement (15) en étant écartés l'un de l'autre dans une position de verrouillage pour s'engager en arrière de la pièce à enfichage (55 ; 105) et qui peuvent être déplacés dans une position de libération pour se désolidariser de la pièce à enfichage (55 ; 105), la pièce de couplage (10 ; 100) comportant un élément d'actionnement (13 ; 73) apte à se déplacer par rapport au corps de couplage (11) et le fait de déplacer l'élément d'actionnement (13 ; 73) permettant de déplacer les éléments de verrouillage (33, 34), en s'opposant à la force de rappel élastique, dans la position de libération dans laquelle ils présentent un écartement qui est supérieur à celui dans la position de verrouillage, **caractérisée en ce que** les éléments de verrouillage (33, 34) sont reliés d'une seule pièce entre eux par un élément élastique (29).

2. Pièce de couplage selon la revendication 1, **caractérisée en ce que** l'élément d'actionnement (13 ; 73) est apte à se déplacer en translation coaxialement à l'axe longitudinal (22) du logement (15).

3. Pièce de couplage selon la revendication 1 ou 2, **caractérisée en ce que** les éléments de verrouillage sont conformés en tiges de verrouillage (33, 34) traversant latéralement le logement (15).

4. Pièce de couplage selon la revendication 3, **caractérisée en ce que** les tiges de verrouillage (33, 34) sont orientées dans la position de verrouillage et dans la position de libération parallèlement l'une à l'autre.

5. Pièce de couplage selon l'une des revendications précédentes, **caractérisée en ce que** l'élément élastique (29) a une conformation en U et comporte deux branches (30, 31) qui sont orientées parallèlement à l'axe longitudinal (22) du logement (15) et qui sont reliées entre elles par une nervure (32).

6. Pièce de couplage selon l'une des revendications précédentes, **caractérisée en ce que** l'élément élastique (29) est disposé du côté extérieur du corps de couplage (11).

7. Pièce de couplage selon l'une des revendications précédentes, **caractérisée en ce que** l'élément d'actionnement (13 ; 73) entoure le corps de couplage (11) dans une direction périphérique.

8. Pièce de couplage selon la revendication 6 ou 7, **caractérisée en ce que** l'élément d'actionnement est conformé en manchon (13 ; 73) qui entoure dans une direction périphérique le corps de couplage (11) et l'élément élastique (29).

9. Pièce de couplage selon l'une des revendications précédentes, **caractérisée en ce que** le corps de couplage (11) et/ou l'élément d'actionnement (13 ; 73) possède des surfaces de glissement (26, 27 ; 47) qui sont orientées obliquement par rapport à l'axe longitudinal (22) du logement (15) et le long desquels les éléments de verrouillage (13, 34) glissent lors du passage de la position de verrouillage dans la position de libération.

10. Pièce de couplage selon la revendication 9, **caractérisée en ce que** le corps de couplage (11) comporte deux évidements (24, 25 ; 82, 83) qui sont diamétralement opposés et qui sont dotés d'une surface orientée obliquement par rapport à l'axe longitudinal (22) du logement (15) et qui forment une surface de glissement (26, 27 ; 84, 85), les éléments de verrouillage (33, 34) pénétrant chacun dans un évidement (24, 25 ; 82, 83).

11. Pièce de couplage selon la revendication 10, **caractérisée en ce que** les évidements sont conformés en trous oblongs (24, 25).

12. Pièce de couplage selon la revendication 10, **caractérisée en ce que** les évidements sont conformés en fentes (82, 83) débouchant dans une face extérieure (21) du corps de couplage (81).

13. Pièce de couplage selon la revendication 10, 11 ou 12, **caractérisée en ce que** les éléments de verrouillage (33, 34) traversent les évidements (24, 25 ; 82, 83 ; 92, 93).

14. Pièce de couplage selon l'une des revendications précédentes, **caractérisée en ce que** l'élément d'actionnement (13, 73) entoure le corps de couplage (11 ; 81 ; 91) dans une direction périphérique et comporte au moins deux éléments de butée (46) dotés d'une surface de butée (47) qui est orientée obliquement par rapport à l'axe longitudinal (22) du logement (15) et qui forment une surface de glissement, les éléments de verrouillage (33, 34) pouvant porter contre la surface de butée (47) par une portion d'extrémité (35, 36) saillant au-dessus de la face extérieure (21) du corps de couplage (11 ; 81 ; 91).

15. Pièce de couplage selon la revendication 14, **caractérisée en ce que** l'élément d'actionnement (13 ; 73) possède deux éléments de butée (46) qui sont associés à chaque élément de verrouillage (33, 34) et contre les surfaces de butée (47) desquels l'élément de verrouillage correspondant (33, 34) peut porter par des premier et deuxièmes portions d'extrémité (35, 36) opposées l'une à l'autre.

16. Pièce de couplage selon la revendication 14 ou 15, **caractérisée en ce que** l'élément d'actionnement est conformé en manchon (13 ; 73) qui entoure le corps de couplage (11 ; 81 ; 91) dans une direction périphérique et qui est doté d'un épaulement annulaire (39) qui est dirigé radialement vers l'intérieur et au niveau duquel sont formés les éléments de butée (46).

17. Pièce de couplage selon l'une des revendications 8 à 16, **caractérisée en ce que** le manchon (13 ; 73) est monté sur le corps de couplage (11 ; 81 ; 91) sans pouvoir tourner autour de l'axe longitudinal (22) du logement (15) tout en pouvant se déplacer en translation coaxialement à l'axe longitudinal (22).

18. Pièce de couplage selon la revendication 17, **caractérisée en ce que** le manchon (13 ; 73) possède du côté intérieur des premiers éléments de guidage (49) qui coopèrent avec des deuxièmes éléments de guidage (23) disposés du côté extérieur sur le corps de couplage (11 ; 81 ; 91).

19. Pièce de couplage selon la revendication 18, **caractérisée en ce que** les premier et/ou deuxième éléments de guidage sont conformés en nervures de guidage (23 ; 29) orientées parallèlement à l'axe longitudinal (22) du logement (15).

20. Pièce de couplage selon l'une des revendications 8 à 19, **caractérisée en ce que** le manchon (13 ; 73) peut être encliqueté avec le corps de couplage (11 ; 81 ; 91).

21. Pièce de couplage selon la revendication 20, **caractérisée en ce que** le manchon (13 ; 73) porte du côté intérieur deux saillies d'encliquetage (43, 44) qui sont diamétralement opposées l'une à l'autre et qui coopèrent chacune avec un élément d'encliquetage (51) disposé du côté extérieur sur le corps de couplage (11 ; 81 ; 91).

22. Pièce de couplage selon l'une des revendications précédentes, **caractérisée en ce que** le logement (15) forme une portion d'étanchéité (16) et une portion de verrouillage (18), la portion d'étanchéité (16) ayant une section à symétrie de révolution par rapport à l'axe longitudinal (22) du logement (15) et la portion de verrouillage (18) ayant une section à asymétrie de révolution par rapport à l'axe longitudinal (22) du logement (15) et les éléments de verrouillage (33, 34) pénétrant dans la portion de verrouillage (18).

23. Pièce de couplage selon la revendication 22, **caractérisée en ce que** la portion de verrouillage (18) possède deux portions de paroi plates (101, 102) qui sont diamétralement opposées l'une à l'autre et qui sont reliées entre elles par deux portions de paroi (103, 104) en arc de cercle.

24. Dispositif de liaison par enfichage comportant une pièce de couplage (10 ; 100) selon l'une des revendications précédentes et une pièce à enfichage (55 ; 105) qui peut être enfichée dans le logement (15) du corps de couplage (11 ; 81 ; 91) et qui possède du côté extérieur au moins une contre-dépouille (61 ; 106, 107) qui coopère avec les éléments de verrouillage (33 ; 34) pour verrouiller la pièce à enfichage (55 ; 105) dans le logement (15).
